# EUROPEAN PATENT APPLICATION

(11) **EP 0 651 950 A1**
(43) Date of publication of application: **10.05.1995**
(21) Application number: 94308136.4
(22) Date of filing: 04.11.1994
(51) Int. Cl.: A23L 1/308, A23L 1/212, A21D 2/36, A23L 1/064

(54) **Fat substitute composition**

(30) Priority: 05.11.1993 GB 9322807
(71) Applicant: KALLO INTERNATIONAL LTD, West Byfleet, Surrey KT14 6NF (GB)
(72) Inventor: Wheeler, Steven, London N6 5TS (GB)
(74) Representative: Allard, Susan Joyce

(57) **Abstract**

The present invention relates to a fat substitute composition comprising apricot puree, pulp, paste or liquid extract which may also contain an edible emulsifier. The composition may further include additional water, acidity stabilisers, sugars or a combination of two or more thereof. The composition is suitable for partial or complete replacement of fat, especially in baked foods.

## Description

The present invention relates to a fat substitute composition comprising apricot puree, pulp, paste or liquid extract which may also contain an edible emulsifier. The composition may further include additional water, acidity stabilisers, sugars or a combination of two or more thereof. The composition is suitable for partial or complete replacement of fat, especially in baked foods.

In todays health-conscious population and with medical acknowledgement of the importance of a low fat diet there is an ever-increasing demand for low fat foods and for low fat cooking ingredients. Many consumer markets already cater for customers' requirements for reduced fat foods, for example "light" and "half-fat" products such as salad dressings and cheeses.

Manufacturers and consumers are also looking towards low fat cooking ingredients. However, proposed low fat cooking ingredients have compromised the taste and/or the texture of end products. Furthermore, low fat ingredients currently on the market are not suitable for use in baking due to a high moisture content which results in the unsatisfactory steaming rather than the desired baking of the product.

Recent trade reports describe a fat and egg substitute known as WONDERSLIM (Registered Trade Mark). This low fat product is based on pureed prunes and is claimed to be suitable for use in cooking, baking and salad dressings. However, use of this product has not been entirely satisfactory. It has been shown to have an overriding dark pigmentation of the end product and when used, in particular in baking, does not produce satisfactorily tasty and/or textured products.

Accordingly, the present invention provides a fat substitute composition comprising apricot puree, pulp, paste or liquid extract. Preferably the liquid extract is whole liquid extract. The composition preferably includes an edible emulsifier such as standard edible emulsifiers used in food products.

The edible emulsifier is preferably lecithin although any other edible emulsifier known in the art may be used. Lecithin is a complex fatty acid ester which is extracted from soya beans for commercial preparations. It is a well known food emulsifier which is essential for the regulation of healthy levels of cholesterol in man. Egg yolks contain a large proportion of lecithin which enables lecithin to substitute for egg yolk in baking. A composition comprising pureed apricots and lecithin therefore provides a fat and egg yolk substitute composition. Commercial egg yolk substitute products can also be used to provide the egg yolk substitute in the fat substitute composition of the present invention, although lecithin is preferred. The quantity of lecithin or other egg yolk substitute in the composition is determined by the maximum desired fat content of the composition and its capability to substitute for egg yolk.

The fat substitute composition of the present invention may further include an acidity stabiliser. Preferably the acidity stabiliser is an organic acid, more preferably it is citric acid, although any known food acidity stabilizer known in the art may be used. The acidity stabiliser may prevent discoloration and "off flavours" of the composition and stabilises the acidity thereof. Ascorbic acid (vitamin C) may also be included in the fat substitute composition.

Sugars such as fructose or a fructose syrup (commonly known as glucose syrup containing fructose) are also preferably included in the fat substitute composition. Such sugars help to preserve the shelf life of the composition and may reduce the need for additional sugars in recipes. The preferred fructose syrup according to the present invention is a blend of fructose, dextrose, maltose and higher sugar (termed "fructose syrup" in the art). This fructose syrup comprises approximately 25% water which may comprise some of the water termed as "additional water" in the present invention. Inclusion of sugars, in particular a fructose syrup, in the fat substitute composition of the present invention results in the combined ingredients having the desired "dropping consistency of soft butter" when used in a one-step baking method. The "dropping consistency of soft butter" describes the preferred viscosity of the combined food ingredients before baking. Preferably the percentage dried weight of the apricots in the fat substitute composition is approximately equal to the percentage weight of sugar (such as fructose syrup). This results in the most preferred viscosity of the mixed recipe ingredients before baking.

The present invention may be made from fresh, frozen or dried apricots. Preferably dried apricots are used. Where dried apricots are used, additional water must be added to reconstitute them, for example before they are pureed or pulped, or after they are minced. Further additional water may also be added to the composition.

The composition of the present invention may comprise from 3.5% to 4.5% by weight of lecithin, preferably 3.0% to 4.5% by weight of lecithin. Preferably the composition comprises up to 0.15% by weight of citric acid, more preferably from 0.05% to 0.15% by weight of citric acid. The composition preferably comprises from 40% to 70% by weight of additional water, more preferably 20% to 60% by weight of additional water, even more preferably 30% to 50% of additional water, some of which may be used to reconstitute dried apricots when used. A fat substitute composition according to the present invention preferably comprises 48% by weight of dried apricots reconstituted with 47.9% weight (of the total composition) of water and pureed, 4% by weight of lecithin and 0.1% by weight of citric acid. Even more preferably a fat substitute composition according to the present invention comprises approximately 38% by weight of sulphured dried apricots, 38% by weight of fructose syrup, 21% by weight of additional water (in addition to the water in the fructose syrup), 3% by weight of 98% unbleached lecithin and 0.1% of potassium sorbate as a preservative.

The present invention also provides a method for making a fat substitute composition as hereinbefore described. The method may comprise either (1) mixing the apricots with any additional water and liquidizing to form a pulp, puree or paste or (2) mincing dried apricots and then mixing and/or blending with additional water to form a pulp, puree or paste; adding any edible emulsifier, any acidity stabiliser or any sugar to the apricot and mixing all the ingredients. The composition is preferably then heated/cooked. Preferably the mixture is cooked/heated under vacuum at 60°C and subsequently for a time at 90°C. Preferably the heating/cooking time at 60°C is 30 minutes and at 90°C is 3 minutes.

Also provided for by the present invention is the new fat substitute composition as hereinbefore described for use in baking food and also any baked food containing the fat substitute composition.

The present invention provides a ready-to-use fat replacement composition which is particularly effective as a fat substitute ingredient in baking foods. The composition provides a "fruit-based" alternative to butter or other fats. The composition may also provide a fat and egg yolk substitute composition. The composition may be used in home or in commercial baking and is particularly effective in the following products:
all chemically risen cakes, muffins, scones, brownies and gingerbread; drop bars, cookies, macaroons, muesli bars and rock cakes;
sweet pastry and crumble toppings; steamed sponge puddings, Christmas puddings, fruit dumplings, baked egg custards, bread and butter pudding and creme caramel; pastry creme, custard fillings and hot souffles; fruit topping for yoghurt, sweet preserves and fruit pie/tart filling.

The colour, taste, texture and nutritional values of apricots are particular advantageous in the present invention. Furthermore, apricots are rich in monosaccharides which enables the fat replacement composition, even in the absence of additional sugars, such as a fructose syrup to reduce the requirement for other sugars in a recipe by up to 60%. The fat replacement composition according to the present invention also has the following advantages: The product may be entirely comprised of natural ingredients and may include no artificial colours, flavouring or preservatives. Addition of a preservative will depend on the packing application to be applied to the fat substitute composition. Where the composition is to be supplied as a fresh product with a relatively short shelf-life preservatives may be omitted. Where the composition is supplied as a ambient product a preservative such as potassium sorbate may be included. Any food preservative known in the art may be included in the fat substitute composition. The product is suitable for vegetarian and vegan diets since it is non-animal, and not of dairy origin. The product is low in fat, low in cholesterol and may be formulated to be relatively low in calories. The product is reported to contain up to 95% to 97% less fat and up to 83% less calories than butter or margarine. It is a substitute composition of the same colour as fats and egg yolk and has a suitable level of inherit sweetness to add a "butter-rich" moistness to cakes and other products.

The composition can be prepared to contain suitably low levels of water so as to avoid the undesired "steaming" of baked products. The composition has a creamy consistency which enables it to mix well with other ingredients, particularly in a "one-step" mixing method. The product is relatively low in salt, high in fibre, nutritous (a good source of vitamins and minerals) and has a good shelf life. It has a good taste of its own which is important since consumers like to taste what they cook with. Most importantly, the composition is capable of producing baked products, for example cakes and biscuits with an acceptable taste, texture and colour comparable to those made with traditional ingredients.

Approximately 30g of the fat substitute composition of the present invention is used with approximately 20ml of additional water to replace 100g of butter or margarine in a baking recipe using white flour. Approximately 35g of the fat substitute composition (also with approximately 20ml of additional water) replaces 100ml of vegetable oil. The fat substitute composition of the present invention is manufactured in a concentrated form to allow for adjustment of moisture depending on the recipes used. For example, in a white flour recipe approximately 20ml of additional water is used for 30g of fat substitute composition whereas in a brown flour recipe approximately 30ml of additional water is used per 30g of fat substitute composition. When the fat substitute composition includes around 4% by weight of lecithin 15g of the fat substitute composition can be used to replace one egg yolk.

The present invention will now be described in more detail with reference to the following non-limiting examples:

### EXAMPLES 1 AND 2

Fat and egg yolk substitute composition:

| | | Specification | |
|---|---|---|---|
| Ingredient | % by wt | Example 1 | Example 2 |
| Dried Apricots | 48 | size 1,unsulphured | size 1, sulphured (SO₂ = max 300ppm) |
| Water | 47.9 | spring/well | purified |
| Lecithin | 4 | 98%-unbleached | 98%-bleached |
| Citric Acid | 0.1 | Natural | Artificial |

### EXAMPLE 3

Fat and egg yolk substitute composition:

| Ingredient | % by wt | Specification |
|---|---|---|
| Apricot pulp | 95.8 | Fresh or frozen containing 58% moisture |
| Lecithin | 4 | 98%-Unbleached liquid or granule |
| Citric Acid | 0.1 | Natural |
| Vitamin C | 0.1 | Natural |

### EXAMPLE 4

Fat and egg yolk substitute composition:

| Ingredient | % by wt | Specification |
|---|---|---|
| Apricot puree | 76 | 50% moisture |
| Frutose | 19.8 | Pure |
| Lecithin | 4 | 98%-Unbleached |
| Citric Acid | 0.1 | Natural |
| Vitamin C | 0.1 | Natural |

### EXAMPLE 5

Fat and egg yolk substitute composition and method of manufacture:

| Ingredient | % by wt | Specification |
|---|---|---|
| Dried Apricots | 37.895 | Sulphured |
| Fructose Syrup | 37.895 | Blend of: Fructose (19%) |
| | | Dextrose (39%) Maltose (26%) |
| | | and higher sugar (16%) |
| Water | 20.952 | |
| Lecithin | 3.158 | 98% (unbleached) |
| Potassium sorbate | 0.1 | |

The dried apricots were first washed and minced and then blended in a blender with water and the other ingredients to form a smooth paste. The blend was then heated under vaccuum for 30 minutes at 60°C and then 3 minutes at 90°C. Some of the composition was filled into glass jars at 85°C and then pasteurised for 5 minutes at 110°C. The remainder of the composition was cooled to ambient temperature and filled into buckets, then refrigerated for bulk commercial use.

### EXAMPLE 6

Method of making the fat and egg yolk substitute composition as described in Example 1 for use as a fresh chilled product:
48g of size 1 unsulphured dried apricots were washed to remove impurities, and rehydrated with 47.9ml of spring water. The rehydrated apricots were liquidized and mixed with 4g of 98% unbleached lecithin and 0.1g of natural citric acid. The resulting composition was packed into glass jars.

### EXAMPLE 7

Method of making the fat substitute composition as described in Example 3.
95.8g of fresh apricot pulp (containing 58% moisture) were blended to form a puree. The puree was mixed with 4g of unbleached liquid lecithin, 0.1g of natural citric acid and 0.1g of natural vitamin C. The mixture was cooked under vacuum for 30 minutes at 60°C and 3 minutes at 90°C. It was then cooled to 70°C before packing into glass jars. The mixture was then pasteurised for 5 minutes at 110°C.
This method can also be used to prepare the fat and egg yolk substitute composition of example 4. The frutose was included in the mixture before heating.

### EXAMPLE 8

Ingredients for standard recipe for a basic Madeira cake:

| Conventional | With Fat and Egg Yolk Substitute Composition of Examples 1, 2 or 3 |
|---|---|
| 175g butter | 50g fat egg yolk substitute composition with 30ml additional water |
| 175 caster sugar | 60 caster sugar |
| 3 eggs | 45g fat and egg yolk substitute composition |
| 175g self raising flour | 175g self raising flour |
| 2g salt | 2g salt |

### EXAMPLE 9

Ingredients for a standard recipe for baked egg custard:

| Conventional | With fat and Egg Yolk Substitute Composition of Examples 1, 2 or 3 |
|---|---|
| 550ml milk | 550ml milk |
| 4 whole eggs | 60g fat and egg yolk substitute composition |
| 50g caster sugar | 20g caster sugar |
| 3ml vanilla essence | 3ml vanilla essence |

## Claims

1. A fat substitute composition comprising apricot puree, pulp, paste or liquid extract.

2. A composition as claimed in claim 1 further comprising one or more ingredients selected from edible emulsifiers, acidity stabilizers, additional water or sugars.

3. A composition as claimed in claim 2 wherein the emulsifier is lecithin.

4. A composition as claimed in claim 3 which is also an egg yolk substitute composition.

5. A composition as claimed in any one of claims 2 to 4 wherein the acidity stabiliser is an organic acid or citric acid.

6. A composition as claimed in any one of claims 2 to 5 wherein the sugar is fructose syrup.

7. A composition as claimed in any one of claims 1 to 6 wherein the apricot puree, pulp, paste or liquid extract is made from fresh apricots or reconstituted dried apricots.

8. A method for making a composition as claimed in any one of claims 1 to 7 comprising:
mixing the apricots with any additional water and liquidizing to form a pulp or puree or paste or mincing dried apricots and then adding additional water to form a pulp or puree or paste;
adding any edible emulsifier, any acidity stabiliser and any sugar to the apricot and mixing all ingredients; and cooking the mixture under vacuum for 30 minutes at 60°C and 3 minutes at 90°C.

9. A composition as claimed in any one of claims 1 to 7 for use in baking food.

10. Baked food containing a composition as claimed in any one of claims 1 to 9.

11. The use of a composition comprising apricot puree, pulp, paste or liquid extract as a fat substitute composition.

12. The use of a composition comprising apricot puree, pulp, paste or liquid extract as a fat and egg yolk substitute composition.
